(19) **Europäisches Patentamt / European Patent Office / Office européen des brevets**

(11) **EP 2 400 133 B1**

(12) **EUROPEAN PATENT SPECIFICATION**

(45) Date of publication and mention of the grant of the patent:
**07.12.2022 Bulletin 2022/49**

(21) Application number: **11159700.1**

(22) Date of filing: **25.03.2011**

(51) International Patent Classification (IPC):
**F02D 41/12** (2006.01)

(52) Cooperative Patent Classification (CPC):
**F02D 41/126;** F02D 2200/0402; F02D 2200/1004

(54) **Engine controlling apparatus**

Motorsteuerungsvorrichtung

Appareil de contrôle de moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2010 JP 2010146032**

(43) Date of publication of application:
**28.12.2011 Bulletin 2011/52**

(73) Proprietor: **Mitsubishi Jidosha Kogyo Kabushiki Kaisha**
**Tokyo 108-8410 (JP)**

(72) Inventors:
• **Toda, Hitoshi**
**Minato-ku**
**Tokyo 108-8410 (JP)**

• **Ueda, Katsunori**
**Minato-ku**
**Tokyo 108-8410 (JP)**

• **Miyata, Toshiyuki**
**Minato-ku**
**Tokyo 108-8410 (JP)**

• **Shibata, Koji**
**Minato-ku**
**Tokyo 108-8410 (JP)**

(74) Representative: **Vossius & Partner**
**Patentanwälte Rechtsanwälte mbB**
**Siebertstrasse 3**
**81675 München (DE)**

(56) References cited:
EP-A2- 1 160 437     JP-A- 2007 085 228
JP-A- 2010 007 637     US-A- 4 452 212
US-A- 4 508 074     US-A- 4 510 911

**Description**

<u>FIELD</u>

The embodiments disclosed herein are related to an engine controlling apparatus for calculating engine torque upon fuel cut.

<u>BACKGROUND</u>

Conventionally, fuel cut control for temporarily stopping supply of fuel is known as control for an engine mounted on a vehicle or the like. In the fuel cut control, fuel supply is cut upon inertial driving, upon deceleration and so forth in which the accelerator pedal is not operated so that enhancement in fuel cost and in deceleration performance is achieved. Then, supply of fuel is re-started when various conditions such as pedaling operation of the accelerator pedal, decrease of the engine speed and so forth are satisfied so that an acceleration performance and a driving performance are secured (for example, refer to Japanese Patent Laid-Open No. 2008-19729).

Incidentally, torque to be generated by an engine is zero during execution of fuel supply cut and the engine torque is generated after a point of time at which fuel supply is re-started. In particular, the engine torque varies discontinuously across a return from the state in which the fuel supply is cut and a torque shock is likely to be generated. Accordingly, it is desired that, before and after fuel cut control, the magnitude of torque generated by the engine is grasped accurately and then the torque is suitably controlled.

In order to satisfy such a demand as described above, as a method for grasping the magnitude of engine torque, a torque calculation method based on various driving conditions such as an engine speed, a fuel injection amount, an intake air amount, an intake pressure and so forth is known. In particular, a relationship between each parameter and engine torque corresponding to various driving conditions is set in a map, a table or the like in advance and the engine torque is estimated and calculated at any time using the map, table or the like (for example, refer to Japanese Patent Laid-Open No. 2003-322045).

However, in the conventional engine torque calculation method, difference in kind between gas existing in a combustion chamber upon normal combustion and gas existing in the combustion chamber upon execution of fuel supply cut is not taken into consideration.

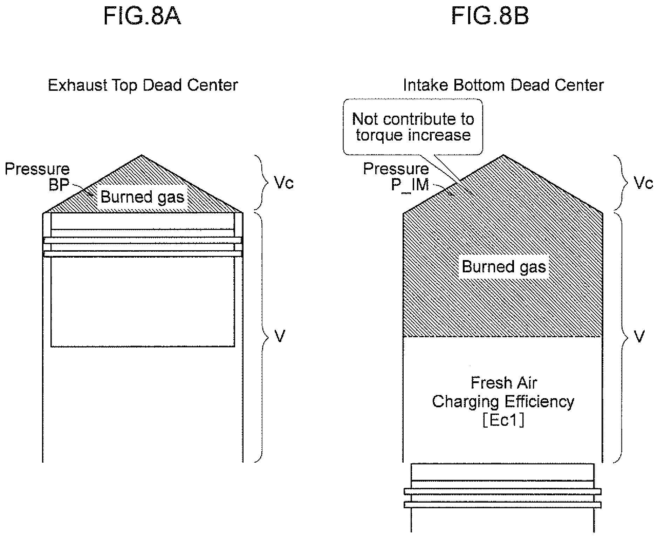

For example, burned gas which is a residual of exhaust gas combusted in a preceding stroke exists in the combustion chamber upon normal combustion. As seen in FIG. 8A, the burned gas remains on the upper end side of the combustion chamber when the piston is positioned at the exhaust top dead center, and the oxygen concentration of the burned gas is remarkably lower than that of fresh air (that is, the open air to be introduced into the combustion chamber) and the burned gas contributes little to increase of the engine torque. Therefore, as seen in FIG. 8B, in the conventional engine torque calculation method, the fuel injection amount and so forth are set with reference to the gas amount of fresh air to be introduced into the combustion chamber in a process in which the piston moves to the intake bottom dead center from within the gas existing in the combustion chamber and the engine torque is calculated based on the set fuel injection amount and so forth.

On the other hand, since gas in the combustion chamber is not combusted upon execution of fuel supply cut, no burned gas exists, and the air under the atmospheric pressure (air having an oxygen concentration same as that of the open air) remains on the upper end side of the combustion chamber when the piston is positioned at the exhaust top dead center. In particular, upon fuel cut return just after the fuel supply cut comes to an end, gas capable of contributing to increase of engine torque exists in the combustion chamber in place of the burned gas. Accordingly, accurate engine torque cannot be grasped in calculation if only the gas amount of fresh air to be introduced into the fuel chamber is used as a reference.

EP 1 160 437 A2 relates to a control apparatus of an internal combustion engine for performing fuel cut control for suspending fuel supply to the internal combustion engine during the operation.

US 4 508 074 A relates to a method of controlling the quantity of intake air being supplied to an internal combustion engine equipped with means for increasing the intake air quantity by a required amount in response to operating conditions of the engine.

JP2007 085228A discloses a control device of an internal combustion engine to suppress an increase in NOX emission amount at the time of returning from a fuel cut by increasing the fuel supply amount to increase the exhaust air-fuel ratio immediately after the fuel cut based on oxygen concentration data in the exhaust gas detected by an exhaust sensor. The in-cylinder air-fuel ratio is then gradually made leaner from the end of a predetermined period to reduce a shock after the fuel cut.

**EP 2 400 133 B1**

## SUMMARY

The present invention has been made in view of such a situation as described above, and it is an object of the present invention to enhance the calculation accuracy of engine torque upon fuel cut return.

It is to be noted that, in addition to the object described above, also it shall be understood as an object of the present invention to achieve such working effects as are provided by the constitutions of several modes for carrying out the present invention hereinafter described but are not provided by the conventional techniques.

An engine controlling apparatus disclosed herein comprises an air amount calculation unit that calculates an air amount introduced into a combustion chamber of an engine and a fuel supplying controlling unit that executes, if a predetermined fuel cut condition is satisfied, fuel supply cut for cutting fuel supply into the combustion chamber but executes, if a predetermined return condition is satisfied, fuel cut return for returning the fuel supply into the combustion chamber.

The engine controlling apparatus further comprises a torque calculation unit that calculates torque outputted from the engine based on a result of the calculation by the air amount calculation unit and a controlling unit that controls a driving parameter of the engine based on the torque calculated by the torque calculation unit.

The engine controlling apparatus further comprises an engine speed detection unit that detects an engine speed of the engine.

Further, the torque calculation unit calculates a standard torque based on a result of the detection by said engine speed detection unit and a result of the calculation by said air amount calculation unit and calculates the torque upon the fuel cut return by multiplying the standard torque with a ratio of an added value of a fresh air amount introduced into the combustion chamber in an intake stroke of the engine upon the fuel cut return and a remaining air amount in the combustion chamber upon fuel cut, the remaining air amount corresponding to a volume of the combustion chamber under the atmospheric pressure, to the fresh air.

With the disclosed engine controlling apparatus, the torque upon fuel cut return can be calculated with high accuracy by calculation based on an added value of the fresh air amount introduced into the combustion chamber upon fuel cut return and the air amount remaining in the combustion chamber corresponding to the volume of the combustion chamber.

## BRIEF DESCRIPTION OF THE DRAWINGS

The nature of this invention, as well as other objects and advantages thereof, will be explained in the following with reference to the accompanying drawings, in which like reference characters designate the same or similar parts throughout the figures and wherein:

FIG. 1 is a block diagram illustrating an engine controlling apparatus according to an embodiment.
FIGS. 2A and 2B are schematic views illustrating a state upon fuel cut return of the engine of FIG. 1. FIG. 2A illustrates a state in which a piston is positioned at the exhaust top dead center. FIG. 2B illustrates another state in which the piston is positioned at the intake bottom dead center.
FIG. 3 is a functional block diagram illustrating an internal configuration of an ECU of FIG. 1.
FIG. 4 is a schematic view illustrating a torque map stored in an arithmetic section of FIG. 3.
FIG. 5 is a block diagram illustrating calculation contents in the calculation section of FIG. 3.
FIG. 6 is a block diagram relating to an engine controlling apparatus as a modification. FIG. 6 is a view illustrating calculation contents by a torque calculation section.
FIG. 7 is a block diagram relating to an engine controlling apparatus as a second modification. FIG. 7 is a view illustrating calculation contents in a torque calculation section.
FIGS. 8A and 8B are schematic views illustrating a state upon normal combustion of an engine as a comparative example. FIG. 8A illustrates a state in which a piston is positioned at the exhaust top dead center. FIG. 8B

illustrates another state in which the piston is positioned at the air intake bottom dead center.

## DESCRIPTION OF EMBODIMENT

In the following, an embodiment of an engine controlling apparatus is described with reference to the drawings. However, the embodiment hereinafter described is illustrative to the end, and there is no intention to eliminate various modifications and applications of the technique not specified in the embodiment hereinafter described.

[1. Configuration of Intake and Exhaust System]

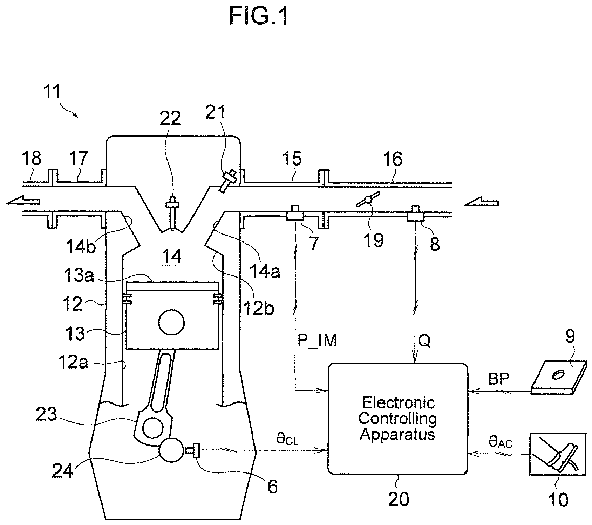

A controlling apparatus of the present embodiment is applied to an intake and exhaust system of an engine 11 shown in FIG. 1. Here, one cylinder 12 from among a plurality of cylinders provided in the multi-cylinder four-cycle type engine 11 is shown.

The cylinder 12 has a hollow cylindrical shape and has a piston 13 provided in the inside thereof. The piston 13 can be moved back and forth in an upward and downward direction along an inner face 12a of the cylinder 12. Further, a top face 12b of the cylinder 12 has a convex shape projected toward the cylinder head side. In FIG. 1, the cylinder 12 whose top face 12b is formed in a pent roof type (triangular roof shape) is shown as an example.

The piston 13 is connected to a crankshaft 24 through a connecting rod 23. The connecting rod 23 is a link mechanism for converting the reciprocating motion of the piston 13 into rotational movement of the crankshaft 24. Further, a crank angle sensor 6 for detecting a rotational angle $\theta_{CL}$ of the crankshaft 24 is provided on the crankshaft 24. The rotation angle $\theta_{CL}$ detected here is transmitted to an electronic controlling apparatus 20 hereinafter described.

The volume of a space enclosed by the inner face 12a and the top face 12b of the cylinder 12 and a top face 13a of the piston 13 varies in response to the position of the piston 13 in upward and downward directions. For example, the volume of the space becomes minimized when the piston 13 is positioned at the top dead center, but the volume of the space becomes maximized when the piston 13 is positioned at the bottom dead center. The space formed in a state in which the piston reaches the top dead center is hereinafter referred to as a combustion chamber 14. It is to be noted that, where the volume (volume of the combustion chamber 14) when the piston 13 is positioned at the top dead center is represented by Vc and the volume (that is, a cylinder volume) when the piston 13 is positioned at the bottom dead center is represented by V, the compression ratio e of the cylinder 12 is represented by the following expression 1.
[Math. 1]

$$e = \frac{Vc + V}{Vc} \quad \Leftrightarrow \quad \left( \frac{1}{e-1} = \frac{Vc}{V} \right) \quad \cdots \quad \text{eq. 1}$$

An intake port 14a, an exhaust port 14b and an ignition plug 22 are provided on the top face 12b of the cylinder 12. An end of an intake manifold 15 is connected to the intake port 14a and an end of an exhaust manifold 17 is connected to the exhaust port 14b. Further, an intake pipe 16 is connected to the other end side of the intake manifold 15 and the other end of the exhaust manifold 17 is connected to an exhaust pipe 18. It is to be noted that an intake valve and an exhaust valve not shown are provided in the intake port 14a and the exhaust port 14b of the combustion chamber 14, respectively, and the valves are controlled for opening and closing in response to the reciprocating motion of the piston 13. Consequently, fresh air is introduced from the intake pipe 16 side into the cylinder 12 and is exhausted to the exhaust pipe 18 side.

An air flow sensor 8 and a throttle valve 19 are provided in the intake pipe 16. The throttle valve 19 is a valve for changing the intake air amount by opening control thereof. Further, the air flow sensor 8 is a sensor for detecting the intake air amount Q introduced into the cylinder 12 through the throttle valve 19.

An intake pressure sensor 7 is provided in the intake manifold 15 on the downstream side with respect to the throttle valve 19. An injector 21 is provided in the intake port 14a on the downstream side further than the intake manifold 15. The intake pressure sensor 7 is a pressure sensor for detecting the intake pressure P_IM (that is, intake manifold pressure), and the injector 21 is a valve for injecting fuel into the intake port 14a.

An atmospheric pressure sensor 9 and an accelerator opening sensor 10 are provided at an arbitrary position of the present intake and exhaust system. The atmospheric pressure sensor 9 is a pressure sensor for detecting the atmospheric pressure BP, and the accelerator opening sensor 10 detects an operation amount $\theta_{Ac}$ (accelerator opening) of the accelerator pedal by the driver.

The intake air amount Q detected by the air flow sensor 8, intake pressure P_IM detected by the intake pressure sensor 7, atmospheric pressure BP detected by the atmospheric pressure sensor 9 and accelerator opening $\theta_{AC}$ detected by the accelerator opening sensor 10 are transmitted to the electronic controlling apparatus 20.

[2. Outline of Control]

The air fuel ratio of air fuel mixture and the intake air amount, fuel injection amount, fuel injection timing, post injection amount, ignition timing and so forth relating to a combustion reaction in the cylinder 12 are controlled by the electronic controlling apparatus 20 [ECU, Engine (electric) Control Unit]. The electronic controlling apparatus 20 is an LSI device in which a microprocessor, a ROM, a RAM and so forth are integrated. In the present embodiment, description is given principally of three kinds of functions of fuel cut control (F/C), torque calculation and engine control from among functions mounted on the electronic controlling apparatus 20.

The fuel cut control is control for temporarily stopping (cutting) fuel injection from the injector 21. In the fuel cut control, fuel is cut when a predetermined fuel cut condition is satisfied and supply of fuel is returned when a predetermined return condition is satisfied. It is to be noted that various fuel cut conditions and return conditions are considered, and the fuel cut condition and the return condition are set based on various conditions such as, for example, the accelerator opening $\theta_{AC}$, vehicle speed, engine speed, engine cooling water temperature, exhaust gas temperature and so forth.

The torque calculation is calculation for an estimation value of torque (actual torque) outputted from the engine 11. Here, calculation processes different from each other are carried out between a case in which supply of fuel is returned from a state in which fuel is cut by the fuel cut control and in any other case. A value of the torque obtained by the torque calculation is used in the engine control.

As described above, in the cylinder 12 upon normal combustion, the burned gas which is the remaining exhaust gas burned in the preceding stroke exists. On the other hand, no burned gas exists in the cylinder 12 when a fuel supplying state is returned from a state wherein the fuel is cut.

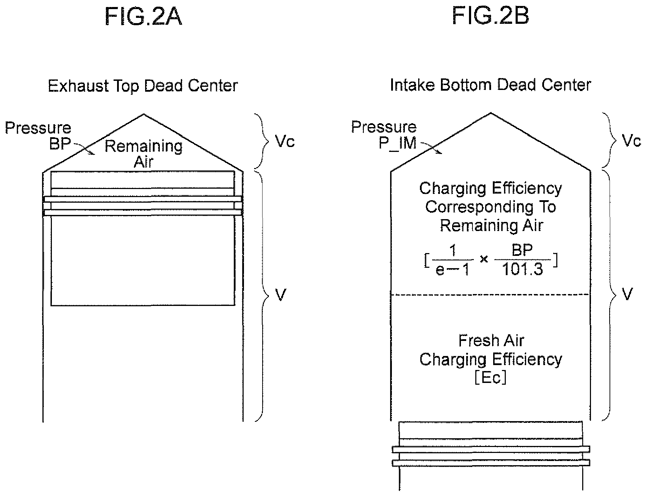

For example, when the piston 13 is positioned at the exhaust top dead center as shown in FIG. 2A, atmospheric pressure air remains in the combustion chamber 14. Thereafter, when the piston 13 moves to the intake bottom dead center as shown in FIG. 2B, fresh air (mixture air including the fuel) introduced in an air intake stroke and the remaining air exist at the same time in the cylinder 12. Therefore, in the torque calculation in the present embodiment, torque to be outputted from the engine 11 is calculated taking the remaining air shown in FIG. 2A into consideration upon return from the fuel cut control. It is to be noted that the torque is calculated from an amount of the fresh air introduced in the air intake stroke except upon return from the fuel cut control.

The engine control is control for adjusting and changing various parameters (driving parameters) regarding a driving state of the engine 11 based on the torque obtained by the torque calculation. The engine control includes intake air amount control, fuel control, ignition timing changing (advance angle, retard angle) control and so forth.

[3. Functions of Electronic Controlling Apparatus]

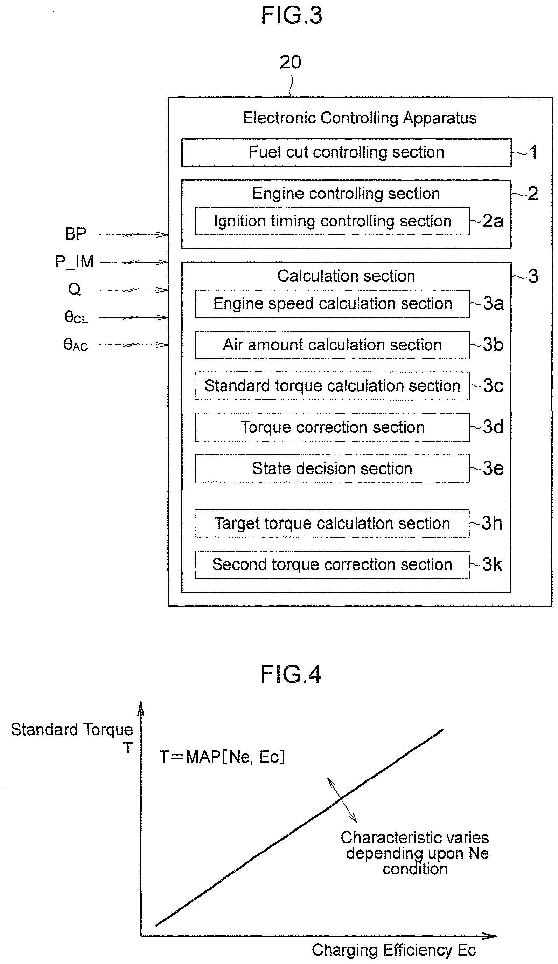

Functions programmed as software or hardware circuits in the inside of the electronic controlling apparatus 20 are schematically illustrated in FIG. 3. It is to be noted that, where the functions are applied as software, functions hereinafter described are implemented by recording the software into a memory or a storage apparatus not shown and reading out the software at any time into a CPU not shown.

The electronic controlling apparatus 20 includes a fuel cut controlling section 1 (fuel supplying controlling means), an engine controlling section 2 (controlling means) and a calculation section 3 (torque calculation means).

The fuel cut controlling section 1 handles the fuel cut control, and the fuel cut condition and the return condition described above are decided here. Further, the fuel cut controlling section 1 transmits, when fuel supply cut is executed and when fuel cut return is executed, information of the execution to the calculation section 3. The information transmitted here is used for condition decision in the calculation section 3.

The engine controlling section 2 handles the engine control and carries out various controls (for example, control regarding the working hydraulic pressure of an automatic speed change gear, output power of the engine 11 and an electric motor and so forth) using the torque transmitted at any time from the calculation section 3. An ignition timing controlling section 2a is provided in the engine controlling section 2.

The ignition timing controlling section 2a compares target torque T_TA calculated by the calculation section 3 hereinafter described with standard torque T or the like to calculate what degree an ignition timing of the engine 11 is to be retarded (carries out ignition retard control) . Here, for example, the retard amount of the ignition timing is adjusted so that the standard torque T and the target torque T_TA coincide with each other. In the adjustment of the retard amount by the ignition timing controlling section 2a, torque to be used as a target of the comparison with the target torque T_TA includes not only the standard torque T but also torque T_FC taking a remaining air amount hereinafter described into consideration.

It is to be noted, as different particular controlling targets by the engine controlling section 2, an opening of the throttle valve 19, a fuel injection amount and a fuel injection timing by the injector 21 and so forth are listed. The information regarding an actual ignition timing adjusted by the ignition timing controlling section 2a and information regarding an actual fuel injection amount are transmitted from the engine controlling section 2 to the calculation section 3.

The calculation section 3 carries out various calculations regarding the torque outputted from the engine 11, and includes an engine speed calculation section 3a, an air amount calculation section 3b (air amount calculation means), a standard torque calculation section 3c, a torque correction section 3d, a state decision section 3e, a target torque calculation section 3h and a second torque correction section 3k.

The engine speed calculation section 3a calculates an engine speed Ne based on a rotational angle $\theta_{CL}$ transmitted from the crank angle sensor 6 and grasps a kind of stroke. There are four kinds of strokes including an intake stroke, a compression stroke, an expansion stroke and an exhaust stroke, and a cyclical procedure wherein the four strokes are carried out in order is called cycle. The engine speed Ne calculated here is transmitted to the standard torque calculation section 3c. Further, the kind of the stroke grasped here is transmitted to the air amount calculation section 3b and the state decision section 3e.

Further, the target torque calculation section 3h calculates the target torque T_TA as a target value of torque to be outputted from the engine 11. A setting method of the target torque T_TA can be arbitrarily selected, and, for example, the target torque T_TA is calculated based on the engine speed Ne (or the rotational angle $\theta_{CL}$ of the crankshaft 24) calculated by the engine speed calculation section 3a and the accelerator opening $\theta_{AC}$ detected by the accelerator opening sensor 10. The target torque T_TA calculated here is transmitted to the ignition timing controlling section 2a of the engine controlling section 2.

The air amount calculation section 3b calculates an air amount (first air amount) introduced into the cylinder 12 in the immediately preceding intake stroke. Here, the air amount is calculated for each cycle of stroke . In the present embodiment, an air amount actually sucked into the cylinder 12 is estimated from the total of the intake air amount Q detected by the air flow sensor 8 during an intake stroke (one stroke within which the piston 13 moves from the top dead center to the bottom dead center) to calculate a charging efficiency Ec. The magnitude of the charging efficiency Ec corresponds to the volume of fresh air sucked into the cylinder 12 by one intake stroke. The charging efficiency Ec calculated here is transmitted to the standard torque calculation section 3c and the torque correction section 3d.

The standard torque calculation section 3c calculates a standard torque T based on the engine speed Ne calculated by the engine speed calculation section 3a and the charging efficiency Ec calculated by the air amount calculation section 3b. The standard torque T is torque produced only from fresh air introduced in the immediately preceding intake stroke from within gas in the cylinder 12 shown in FIG. 2B. The standard torque calculation section 3c stores a three-dimensional map in which a relationship among the standard torque T, engine speed Ne and charging efficiency Ec is defined, for example, as seen in FIG. 4, and calculates the standard torque T using the map.

The standard torque T increases substantially in proportion to the fresh air amount introduced in the intake stroke. In particular, the standard torque T has an inclination in which it increases as the charging efficiency Ec increases, and increases substantially in proportion to the charging efficiency Ec if the engine speed Ne is fixed. Further, the corresponding relationship between the standard torque T and the charging efficiency Ec varies in response to the engine speed Ne. It is to be noted that the standard torque T obtained from the map is an estimation value of the torque to be generated by the engine 11 where the air fuel ratio is a theoretical air fuel ratio and the ignition timing is MBT (Minimum Advance for Best Torque) . The standard torque T calculated by the standard torque calculation section 3c is transmitted to the ignition timing controlling section 2a of the engine controlling section 2.

The torque correction section 3d calculates a ratio k of a charging efficiency in the entire cylinder with respect to the charging efficiency Ec calculated by the air amount calculation section 3b in accordance with the expression 2 given below based on the charging efficiency Ec calculated by the air amount calculation section 3b and the atmospheric pressure BP detected by the atmospheric pressure sensor 9. The ratio k is calculated based on an added value of the air amount (that is, the remaining air amount) under the atmospheric pressure BP corresponding to the volume of the combustion chamber 14 shown in FIG. 2A and the air amount introduced as fresh air shown in FIG. 2B.

[Math. 2]

$$k = \frac{\dfrac{1}{e-1} \times \dfrac{BP}{101.3} + Ec}{Ec} \quad \cdots \quad \text{eq. 2}$$

The value 101.3 [kPa] in the expression 2 indicates the standard atmospheric pressure. It is to be noted that, if the relationship of the expression 1 is used, then the expression 2 can be transformed into the expression 3. Accordingly, the torque correction section 3d may calculate the ratio k in accordance with the following expression 3.

[Math. 3]

$$k = \frac{\dfrac{Vc}{V} \times \dfrac{BP}{101.3} + Ec}{Ec} \quad \cdots \quad \text{eq. 3}$$

Further, the torque correction section 3d multiplies the standard torque T calculated by the standard torque calculation section 3c by the ratio k to calculate torque T_FC taking the remaining air amount into consideration. The sum value (that is, a value corresponding to the numerator of the expression 3) between the volume of the remaining air and the volume of the fresh air sucked into the cylinder 12 by one intake stroke is a volume of air actually existing in the cylinder. In particular, it is calculated here what times of volume the volume of air actually existing in the cylinder is with respect to the volume of the fresh air sucked into the cylinder 12 by one intake stroke, and it is determined that the torque T_FC outputted from the engine 11 increases at a ratio equal to that of a result of the calculation. It is to be noted that, if the expressions 2 and 3 are used, then the torque T_FC can be represented by two manners as given by the expression 4.

[Math. 4]

$$T\_FC = k \cdot T = \frac{\dfrac{1}{e-1} \times \dfrac{BP}{1013} + Ec}{Ec} \times T \quad \Leftrightarrow \quad \left( T\_FC = \frac{\dfrac{Vc}{V} \times \dfrac{BP}{1013} + Ec}{Ec} \times T \right) \cdots \quad \text{eq. 4}$$

The state decision section 3e determines the torque outputted from the engine 11 based on the information of presence or absence of the fuel cut control transmitted from the fuel cut controlling section 1 and the information of the stroke grasped by the engine speed calculation section 3a and transmits the determined torque to the engine controlling section 2.

First, the state decision section 3e decides that the torque outputted from the engine 11 is zero during execution of the fuel cut control and transmits a result of the decision to the engine controlling section 2.

On the other hand, when the fuel cut control is not carried out, the number of strokes after a point of time at which the control is returned from the fuel cut control and so forth are referred to. Then, if first combustion does not yet occur in the cylinder 12 after the return, then the torque T_FC taking the remaining air amount into consideration is transmitted to the engine controlling section 2. On the other hand, if the first combustion occurs in the cylinder 12 after the return, then the standard torque T is transmitted to the engine controlling section 2.

For example, in the case where the engine 11 is a four-cylinder engine, an estimation value of the torque outputted from the engine 11 is equal to the value of the torque T_FC before four strokes advance from a point of time at which the control is returned from the fuel cut control. However, the estimation value is equal to the value of the standard torque T after the four strokes. Consequently, the engine torque taking the remaining air amount into consideration is estimated until combustion occurs once in each cylinder 12 after the return from the fuel cut control.

The second torque correction section 3k calculates actual torque obtained by correcting the torque based on the actual ignition timing and the actual fuel injection amount transmitted from the engine controlling section 2. Since the magnitude of the torque actually outputted from the engine 11 varies depending upon the ignition timing and the fuel injection amount (A/F), the standard torque T and the torque T_FC taking the remaining air amount into consideration are corrected here and the actual torque after the correction is transmitted to the engine controlling section 2. It is to be noted that the actual torque is used for various controls relating, for example, to the working hydraulic pressure of the automatic speed change gear and output power from the engine 11 and the electric motor.

The order of calculation regarding the torque calculation in the electronic controlling apparatus 20 described above is such as follows.

[1] Calculation of standard torque T
[2] Calculation of torque T_FC (correction upon fuel cut return)
[3] Correction calculation of ignition timing (timing at which ignition is to be carried out)
[4] Actual torque calculation by actual ignition timing (timing at which ignition is carried out) and Fuel Injection Amount (A/F)

[4. Operation]

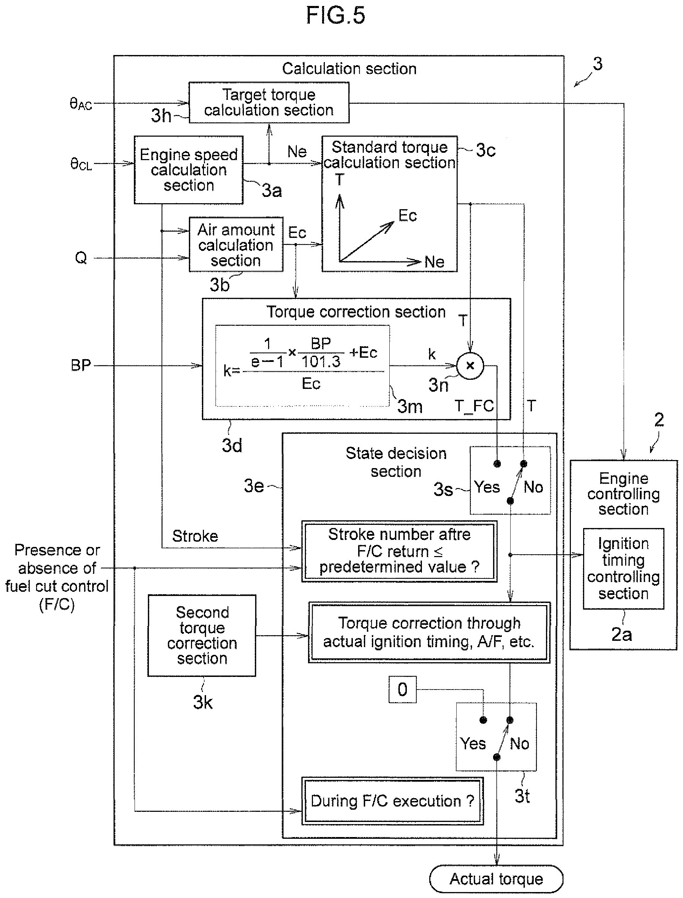

Calculation contents in the calculation section 3 are described with reference to FIG. 5.

The rotational angle $\theta_{CL}$ transmitted from the crank angle sensor 6 is inputted to the engine speed calculation section 3a, and the intake air amount Q detected by the air flow sensor 8 is inputted to the air amount calculation section 3b. Further, the accelerator opening $\theta_{AC}$ detected by the accelerator opening sensor 10 is inputted to the target torque calculation section 3h. Further, the atmospheric pressure BP detected by the atmospheric pressure sensor 9 is inputted to the torque correction section 3d and the information of presence or absence of the fuel cut control transmitted from the fuel cut controlling section 1 is inputted to the state decision section 3e.

In the engine speed calculation section 3a, the engine speed Ne is calculated from the rotational angle $\theta_{CL}$ and is inputted to the standard torque calculation section 3c and the target torque calculation section 3h. Further, the information of the stroke grasped by the engine speed calculation section 3a is inputted to the air amount calculation section 3b and the state decision section 3e.

In the target torque calculation section 3h, the target torque T_TA is calculated based on the accelerator opening and the engine speed Ne. The target torque T_TA is transmitted to the ignition timing controlling section 2a of the engine controlling section 2.

In the air amount calculation section 3b, the charging efficiency Ec is calculated for each cycle of stroke from the intake air amount Q and is inputted to the standard torque calculation section 3c and the torque correction section 3d.

In the standard torque calculation section 3c, the standard torque T is calculated using the engine speed Ne, charging efficiency Ec and three-dimensional map. The standard torque T is inputted to the torque calculation section 3d and the state decision section 3e.

A computing unit 3m and a multiplier 3n are provided in the torque calculation section 3d. The atmospheric pressure BP and the charging efficiency Ec are inputted to the computing unit 3m such that the ratio k is calculated in accordance with the expression 2 given hereinabove. The ratio k calculated here is inputted to the multiplier 3n. Further, in the multiplier 3n, the torque T_FC is calculated by multiplying the standard torque T by the ratio k and is inputted to the state decision section 3e.

A first selector 3s and a second selector 3t are provided in the state decision section 3e. The standard torque T and the torque T_FC are inputted to the first selector 3s and one of the torques T and T_FC is selected in accordance with a control condition. The control condition is decided based on the information of presence or absence of the fuel cut control and the information of stroke. Here, in the case where the number of strokes is equal to or smaller than the predetermined number (for example, the number of cylinders) after a point of time at which the control is returned from the fuel cut control, the torque T_FC is selected and inputted to the second selector 3t. Further, in the case where the number of strokes is greater than the predetermined number, the standard torque T is selected and inputted to the second selector 3t.

The number of times by which the torque T_FC is selected in the first selector 3s is equal to the number of cylinders of the engine 11. In particular, the torque T_FC is used for the torque calculation relating to first combustion in each cylinder after return from the fuel cut control.

The torque selected by the first selector 3s is inputted to the ignition timing controlling section 2a of the engine controlling section 2 and the second torque correction section 3k. In the ignition timing controlling section 2a, the torque selected by the first selector 3s and the target torque T_TA are compared with each other and a retard amount of the ignition timing is adjusted. Further, the retard amount adjusted here is transmitted to the second torque correction section 3k of the calculation section 3.

In the second torque correction section 3k, the inputted torque is corrected in response to the actual ignition timing and the fuel injection amount. The torque after the correction is inputted to the second selector 3t.

To the second selector 3t, the torque after the correction selected by the first selector 3s is inputted and a zero signal which signifies that the engine 11 does not output torque is inputted, and one of the corrected torque and the zero signal is selected in accordance with the control condition. The control condition is decided based on the information of presence or absence of the fuel cut control. Here, in the case where the fuel cut control is carried out, the zero signal is selected. On the other hand, where the fuel cut control is not carried out, the torque selected by the first selector 3s is selected. The torque selected here is inputted to the engine controlling section 2 and is used for various controls of the engine 11.

[5. Effect]

In this manner, with the present controlling apparatus, the torque calculation taking the magnitude of the torque generated by the remaining air into consideration can be carried out by calculation based on the added value of the value (charging efficiency Ec) corresponding to the amount of fresh air introduced in the combustion chamber 14 upon return from the fuel cut control and the value corresponding to the air amount (air amount remaining in the combustion chamber) corresponding to the volume of the combustion chamber 14. Accordingly, the engine torque upon return from the fuel cut control can be determined with high accuracy.

Further, in the present controlling apparatus, the torque correction section 3d calculates the torque T_FC by multiplying the standard torque T by the ratio k utilizing the characteristic that the engine torque increases substantially in proportion to the air amount in the cylinder. Consequently, the torque upon return from the fuel cut control can be calculated accurately.

Further, the present controlling apparatus has an advantage that the engine torque can be accurately grasped with the simple calculation configuration without using, for example, the intake manifold pressure P_IM in the calculation and the cost can be decreased.

[6. Modification or the Like]

Irrespective of the embodiment described above, variations and modifications can be made without departing from the scope of the present invention. The configurations of the present embodiment can be selected or omitted as occasion demands or may be suitably combined.

[6-1. Case in Which Intake Pressure Is Used]

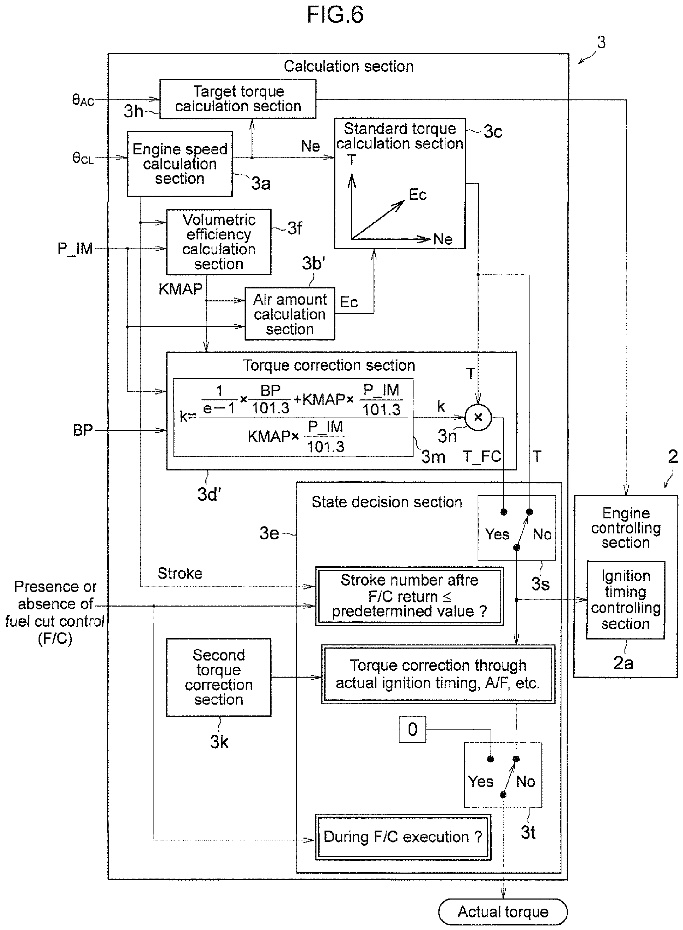

While the air amount calculation section 3b in the embodiment described above calculates the charging efficiency Ec based on the intake air amount Q detected by the air flow sensor 8, the calculation method of the charging efficiency Ec is not limited to this. For example, it is imaginable to calculate the charging efficiency Ec based on the intake pressure P_IM detected by the intake pressure sensor 7. Calculation contents in the calculation section 3 as the modification are illustrated in FIG. 6. It is to be noted that, in FIG. 6, like elements to those in FIG. 5 are denoted by like reference characters .

The intake pressure P_IM detected by the intake pressure sensor 7 is inputted to an air amount calculation section 3b' and a volumetric efficiency calculation section 3f. The volumetric efficiency calculation section 3f (volumetric efficiency calculation means) calculates a volumetric efficiency coefficient KMAP of air introduced into the combustion chamber 14 of the engine 11 upon combustion based on the engine speed Ne and the intake pressure P_IM inputted from the engine speed calculation section 3a. The volumetric efficiency coefficient KMAP calculated here is inputted to the air amount calculation section 3b'.

The air amount calculation section 3b' calculates the charging efficiency Ec using the following expression 5 based on the intake pressure P_IM and the volumetric efficiency coefficient KMAP. In particular, the charging efficiency Ec is calculated here without using the intake air amount Q. The charging efficiency Ec calculated here is transmitted to the standard torque calculation section 3c.

[Math. 5]

$$Ec = KMAP \times \frac{P\_IM}{101.3} \quad \cdots \quad \text{eq. 5}$$

A torque correction section 3d' calculates the ratio k of the charging efficiency in the entire cylinder with respect to the charging efficiency Ec calculated by the air amount calculation section 3b based on the intake pressure P_IM detected by the intake pressure sensor 7, volumetric efficiency coefficient KMAP calculated by the volumetric efficiency calculation section 3f and atmospheric pressure BP detected by the atmospheric pressure sensor 9. The calculation expression used here can be represented as given below from the expressions 2 and 5.

[Math. 6]

$$k = \frac{\dfrac{1}{e-1} \times \dfrac{BP}{101.3} + KMAP \times \dfrac{P\_IM}{101.3}}{KMAP \times \dfrac{P\_IM}{101.3}} \quad \cdots \quad \text{eq. 6}$$

Further, the torque correction section 3d' multiplies the standard torque T calculated by the standard torque calculation section 3c by the ratio k to calculate the torque T_FC taking the remaining air amount into consideration. It is to be noted that, if the expressions 2, 3 and 6 are used, then the torque T_FC can be represented in two manners as given by the following expression 4.

[Math. 7]

$$T\_FC = k \cdot T = \frac{\dfrac{1}{e-1} \times \dfrac{BP}{101.3} + KMAP \times \dfrac{P\_IM}{101.3}}{KMAP \times \dfrac{P\_IM}{101.3}} \times T$$

$$\Leftrightarrow \left( T\_FC = \frac{\dfrac{Vc}{V} \times \dfrac{BP}{101.3} + KMAP \times \dfrac{P\_IM}{101.3}}{KMAP \times \dfrac{P\_IM}{101.3}} \times T \right) \quad \cdots \quad \text{eq. 7}$$

In this manner, the charging efficiency Ec can be removed from the calculation expression by the correction calculation of the torque using the intake pressure P_IM. Further, also the standard torque T can be estimated using the intake pressure P_IM. Accordingly, the torque T_FC outputted from the engine 11 can be calculated accurately even if the intake air amount Q is unknown, and the present controlling apparatus can be applied, for example, also to a vehicle in which the air flow sensor 8 is not mounted.

[6-2. Case in Which Ec1 Is Considered]

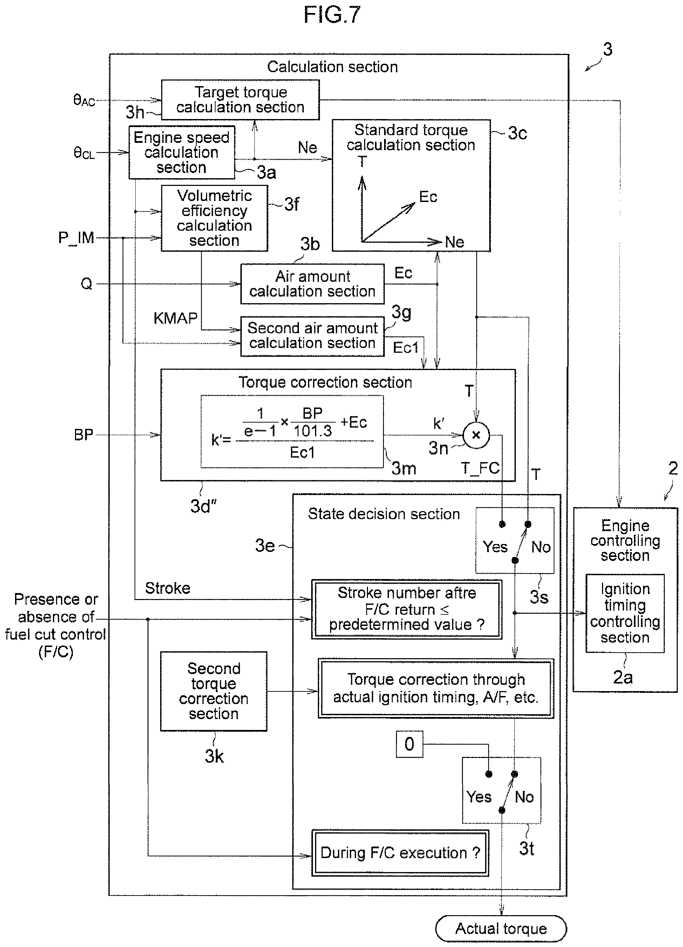

While the torque correction section 3d in the embodiment described above calculates the ratio k of the charging efficiency in the entire cylinder with respect to the charging efficiency Ec calculated by the air amount calculation section 3b, also it is imaginable to use, as the charging efficiency Ec, a charging efficiency Ec1 corresponding to the amount (second air amount) of air introduced into the combustion chamber 14 in the intake stroke upon combustion of the engine 11, that is, an estimation charging efficiency. Calculation contents in the calculation section 3 as a second modification are illustrated in FIG. 7. It is to be noted that, in FIG. 7, like elements to those in FIG. 5 are denoted by like reference characters.

The intake pressure P_IM detected by the intake pressure sensor 7 is inputted to the volumetric efficiency calculation section 3f and a second air amount calculation section 3g. The volumetric efficiency calculation section 3f (volumetric efficiency calculation means) calculates the volumetric efficiency coefficient KMAP of air introduced into the combustion chamber 14 of the engine 11 upon combustion based on the engine speed Ne inputted from the engine speed calculation section 3a and the intake pressure P_IM. The volumetric efficiency coefficient KMAP calculated here is inputted to the second air amount calculation section 3g.

The second air amount calculation section 3g (air amount calculation means) calculates the charging efficiency Ec1 using the following expression 8 based on the intake pressure P_IM and the volumetric efficiency coefficient KMAP. Here, not the charging efficiency upon fuel cut control but the charging efficiency Ec1 upon combustion is calculated. The charging efficiency Ec1 calculated here is transmitted to the standard torque calculation section 3c.

[Math. 8]

$$Ec1 = KMAP \times \frac{P\_IM}{101.3} \quad \cdots \quad eq. \ 8$$

The torque correction section 3d' calculates a ratio k' of the charging efficiency in the entire cylinder with respect to the charging efficiency Ec1 calculated by the second air amount calculation section 3g in accordance with the following expression 9 based on the charging efficiency Ec calculated by the air amount calculation section 3b, charging efficiency Ec1 calculated by the second air amount calculation section 3g and atmospheric pressure BP detected by the atmospheric pressure sensor 9. The ratio k' is calculated based on the added value of the air amount (that is, remaining air amount) under the atmospheric pressure BP corresponding to the volume of the combustion chamber 14 shown in FIG. 2A and the amount of air introduced as fresh air shown in FIG. 2B.

[Math. 9]

$$k' = \frac{\dfrac{1}{e-1} \times \dfrac{BP}{101.3} + Ec}{Ec1} \quad \cdots \quad eq. \ 9$$

It is to be noted that the expression 9 can be transformed into the following expression 10 using the relationship of the expression 1. Accordingly, the torque correction section 3d' may calculate the ratio k' in accordance with the following expression 10.

[Math. 10]

$$k' = \frac{\dfrac{Vc}{V} \times \dfrac{BP}{101.3} + Ec}{Ec1} \quad \cdots \quad eq. \ 10$$

Further, the torque correction section 3d multiplies the standard torque T calculated by the standard torque calculation section 3c by the ratio k to calculate the torque T_FC taking the remaining air amount into consideration. The added value (that is, a value corresponding to the numerator of the expression 3) of the volume of the remaining air and the volume of fresh air sucked into the cylinder 12 by one intake stroke indicates a volume of the air actually existing in the cylinder. In particular, it is calculated here what times of the volume the volume of the air actually existing in the cylinder is with respect to the volume of the fresh air sucked into the cylinder 12 by one intake stroke upon combustion, and the torque T_FC outputted from the engine 11 increases at a ratio equal to that of a result of the calculation. It is to be noted that, if the expressions 2 and 3 are used, then the torque T_FC can be represented in two manners as given by the expression 11.

[Math. 11]

$$T\_FC = k' \cdot T = \frac{\frac{1}{e-1} \times \frac{BP}{101.3} + Ec}{Ec1} \times T = \frac{\frac{1}{e-1} \times \frac{BP}{101.3} + Ec}{KMAP \times \frac{P\_IM}{101.3}} \times T$$

$$\Leftrightarrow \left( T\_FC = \frac{\frac{Vc}{V} \times \frac{BP}{101.3} + Ec}{Ec1} \times T = \frac{\frac{Vc}{V} \times \frac{BP}{101.3} + Ec}{KMAP \times \frac{P\_IM}{101.3}} \times T \right)$$

$\cdots$ eq. 11

In this manner, since an influence on the introduction amount of the fresh air by the combustion state of the engine 11 and an influence on the introduction amount of the fresh air by the remaining air remaining in the combustion chamber upon fuel cut are taken into consideration in the correction calculation of the torque using the charging efficiency Ec1 corresponding to the amount of air introduced into the combustion chamber 14 in the intake stroke upon combustion of the engine 11, the torque upon fuel cut control return can be calculated still more accurately.

Further, more accurate torque calculation can be implemented by calculating the charging efficiency Ec1 corresponding to the second air amount based on the intake pressure P_IM and the volumetric efficiency coefficient KMAP.

It is to be noted that, as an additional remark, the controlling apparatus according to the embodiment described above has an advantage, in comparison with the second modification, that the charging efficiency Ec1 corresponding to the second air amount which is the fresh air amount upon combustion of the engine 11 is unnecessary in the calculation and the calculation configuration can be simplified.

[6-3. Other Modifications]

While, in the embodiment described above, the torque T_FC and the standard torque T are selected by the state decision section 3e of the calculation section 3 taking the number of times of stroke according to the number of cylinders of the engine 11 as a condition, the selection condition of the torque is not limited to this. For example, suitable torque may be selected grasping the combustion state or presence or absence of misfire in the actual combustion chamber 14.

Further, while, in the embodiment described above, the standard torque T is calculated by the standard torque calculation section 3c based on the engine speed Ne and the charging efficiency Ec, the particular calculation method for the standard torque is not limited to this. For example, the standard torque may be calculated using a vehicle speed, a fuel injection amount, a throttle opening, an accelerator opening $\theta_{AC}$ or the like or may be calculated in addition to correction with the outdoor temperature, the cooling water temperature or the like.

It is to be noted that the disclosed engine controlling apparatus can be applied to both of a diesel engine and a gasoline engine.

The invention thus described, it will be obvious that the same may be varied in many ways. Such variations are not to be regarded as a departure from the scope of the invention, and all such modifications as would be obvious to one skilled in the art are intended to be included within the scope of the following claims.

**REFERENCE SIGNS LIST**

1 fuel cut controlling section (fuel supplying controlling unit)
2 engine controlling section (controlling unit)
2a ignition timing controlling section
3 calculation section (torque calculation unit)

3a engine speed calculation section
3b air amount calculation section (air amount calculation unit)
3c standard torque calculation section
3d torque correction section
3e state decision section
3f volumetric efficiency calculation section (volumetric efficiency calculation unit)
3g second air amount calculation section (air amount calculation unit)
3h target torque calculation section
3k second torque correction section
3m computing unit
3n multiplier
3s first selector
3t second selector

6 crank angle sensor (engine speed detection unit)
7 intake pressure sensor (intake pressure detection unit)
8 air flow sensor
9 atmospheric pressure sensor
10 accelerator opening sensor
11 engine
12 cylinder
14 combustion chamber
20 electronic controlling apparatus

**Claims**

1. An engine controlling apparatus, comprising:

    an air amount calculation unit (3b) that calculates an air amount introduced into a combustion chamber of an engine;
    a fuel supplying controlling unit (1) that executes, if a predetermined fuel cut condition is satisfied, fuel supply cut for cutting fuel supply into the combustion chamber but executes, if a predetermined return condition is satisfied, fuel cut return for returning the fuel supply into the combustion chamber;
    a torque calculation unit (3) that calculates torque outputted from the engine based on a result of the calculation by said air amount calculation unit (3b);
    a controlling unit (2) that controls a driving parameter of the engine based on the torque calculated by said torque calculation unit (3); and
    an engine speed detection unit (6) that detects an engine speed of the engine wherein
    said torque calculation unit (3) calculates a standard torque based on a result of the detection by said engine speed detection unit (6) and a result of the calculation by said air amount calculation unit (3b) and **characterized in that** the torque calculation unit (3) calculates the torque upon the fuel cut return by multiplying the standard torque with a ratio of an added value of a fresh air amount introduced into the combustion chamber in an intake stroke of the engine upon the fuel cut return and a remaining air amount in the combustion chamber upon fuel cut, the remaining air amount corresponding to a volume of the combustion chamber under the atmospheric pressure, to the fresh air.

2. The engine controlling apparatus according to claim 1, wherein
    said torque calculation unit (3) uses an air amount introduced into the combustion chamber in an intake stroke upon combustion of the engine as the fresh air amount and calculates the torque upon the fuel cut return based on a ratio between the air amount introduced into the combustion chamber in the intake stroke and the added value.

3. The engine controlling apparatus according to claim 2, further comprising:

    an intake pressure detection unit (7) that detects an intake pressure of the engine; and
    a volumetric efficiency calculation unit (3f) that calculates a volumetric efficiency of air introduced into the combustion chamber based on the intake pressure detected by said intake pressure detection unit (7); wherein
    said torque calculation unit (3) calculates the fresh air amount based on the intake pressure detected by said intake pressure detection unit (7) and the volumetric efficiency calculated by said volumetric efficiency calculation unit (3f).

**Patentansprüche**

1. Motorsteuerungsvorrichtung, aufweisend:

ein Luftmenge-Berechnungseinheit (3b), die eine in eine Verbrennungskammer eines Motors eingeführte Luftmenge berechnet;
eine Kraftstoffzufuhr-Steuerungseinheit (1), die, falls eine vorgegebene Kraftstoffreduktionbedingung erfüllt ist, eine Kraftstoffzufuhrreduktion zur Reduktion von Kraftstoffzufuhr in die Verbrennungskammer ausführt, aber falls eine vorgegebene Rückkehrbedingung erfüllt ist, eine Kraftstoffreduktionsrückkehr zur Rückkehr der Kraftstoffzufuhr in die Verbrennungskammer ausführt;
eine Drehmomentberechnungseinheit (3), die auf Basis eines Ergebnisses der von der Luftmenge-Berechnungseinheit (3b) durchgeführten Berechnung ein von dem Motor abgegebenes Drehmoment berechnet;
eine Steuereinheit (2), die auf Basis des von der Drehmomentberechnungseinheit (3) berechneten Drehmoments einen Antriebsparameter des Motors steuert; und
eine Motordrehzahl-Detektionseinheit (6), die eine Motordrehzahl des Motors detektiert, wobei
die Drehmomentberechnungseinheit (3) ein Standarddrehmoment auf Basis eines Ergebnisses der von der Motordrehzahl-Detektionseinheit (6) durchgeführten Detektion und eines Ergebnisses der von der Luftmenge-Berechnungseinheit (3b) durchgeführten Berechnung berechnet, und
**dadurch gekennzeichnet, dass** die Drehmomentberechnungseinheit (3) das Drehmoment bei Kraftstoffreduktionsrückkehr berechnet durch Multiplizieren des Standarddrehmoments mit einem Verhältnis eines addierten Werts einer hinzugefügten Frischluftmenge, die in die Verbrennungskammer in einem Einlasstakt des Motors bei der Kraftstoffreduktionsrückkehr eingeführt wird, und einer Restluftmenge in der Verbrennungskammer bei Kraftstoffreduktion, wobei die Restluftmenge einem Volumen der Verbrennungskammer unter Atmosphärendruck entspricht, zur Frischluft.

2. Motorsteuerungsvorrichtung nach Anspruch 1, wobei
die Drehmomentberechnungseinheit (3) eine Luftmenge, die in die Verbrennungskammer in einem Einlasstakt des Motors bei Verbrennung eingeführt wird, als die Frischluftmenge verwendet und das Drehmoment bei der Kraftstoffreduktionsrückkehr auf Basis eines Verhältnisses zwischen der in dem Einlasstakt in die Verbrennungskammer eingeführten Luftmenge und dem addierten Wert berechnet.

3. Motorsteuerungsvorrichtung nach Anspruch 2, ferner aufweisend:

eine Einlassdruck-Detektionseinheit (7), die einen Einlassdruck des Motors detektiert; und
eine Volumeneffizienz-Berechnungseinheit (3f), die auf Basis des von der Einlassdruck-Detektionseinheit (7) detektierten Einlassdrucks eine Volumeneffizienz von in die Verbrennungskammer eingeführter Luft berechnet; wobei
die Drehmomentberechnungseinheit (3) die Frischluftmenge auf Basis des von der Einlassdruck-Detektionseinheit (7) detektierten Einlassdrucks und der von der Volumeneffizienz-Berechnungseinheit (3f) berechneten Volumeneffizienz berechnet.

**Revendications**

1. Appareil de contrôle de moteur, comprenant :

une unité de calcul de quantité d'air (3b) qui calcule une quantité d'air introduite dans une chambre de combustion d'un moteur ;
une unité de contrôle d'introduction de carburant (1) qui exécute, si une condition de coupure de carburant prédéterminée est satisfaite, la coupure d'introduction de carburant pour couper l'introduction de carburant dans la chambre de combustion mais exécute, si une condition de retour prédéterminée est satisfaite, le retour de coupure de carburant pour renvoyer l'introduction de carburant dans la chambre de combustion ;
une unité de calcul de couple (3) qui calcule un couple fourni par le moteur sur la base d'un résultat du calcul par ladite unité de calcul de quantité d'air (3b) ;

une unité de contrôle (2) qui contrôle un paramètre de commande du moteur sur la base du couple calculé par ladite unité de calcul de couple (3) ; et

une unité de détection de vitesse de moteur (6) qui détecte une vitesse de moteur du moteur dans lequel ladite unité de calcul de couple (3) calcule un couple standard sur la base d'un résultat de la détection par ladite unité de détection de vitesse de moteur (6) et d'un résultat du calcul par ladite unité de calcul de quantité d'air (3b) et

**caractérisé en ce que** l'unité de calcul de couple (3) calcule le couple au moment du retour de coupure de carburant en multipliant le couple standard par un rapport d'une valeur ajoutée d'une quantité d'air frais introduite dans la chambre de combustion dans une course d'admission du moteur au moment du retour de coupure de carburant et d'une quantité d'air restante dans la chambre de combustion au moment de la coupure de carburant, la quantité d'air restante correspondant à un volume de la chambre de combustion sous la pression atmosphérique, par rapport à l'air frais.

2. Appareil de contrôle de moteur selon la revendication 1, dans lequel

ladite unité de calcul de couple (3) utilise une quantité d'air introduite dans la chambre de combustion dans une course d'admission au moment de la combustion du moteur comme la quantité d'air frais et calcule le couple au moment du retour de coupure de carburant sur la base d'un rapport entre la quantité d'air introduite dans la chambre de combustion dans la course d'admission et la valeur ajoutée.

3. Appareil de contrôle de moteur selon la revendication 2, comprenant de plus :

une unité de détection de pression d'admission (7) qui détecte une pression d'admission du moteur ; et

une unité de calcul de rendement volumétrique (3f) qui calcule un rendement volumétrique d'air introduit dans la chambre de combustion sur la base de la pression d'admission détectée par ladite unité de détection de pression d'admission (7) ; dans lequel

ladite unité de calcul de couple (3) calcule la quantité d'air frais sur la base de la pression d'admission détectée par ladite unité de détection de pression d'admission (7) et le rendement volumétrique calculé par ladite unité de calcul de rendement volumétrique (3f).

FIG.1

# FIG.2A

Exhaust Top Dead Center

Pressure
BP — Remaining Air

$V_c$

$V$

# FIG.2B

Intake Bottom Dead Center

Pressure
P_IM

$V_c$

Charging Efficiency
Corresponding To
Remaining Air

$$[\frac{1}{e-1} \times \frac{BP}{101.3}]$$

Fresh Air
Charging Efficiency
[Ec]

$V$

# FIG.3

20

Electronic Controlling Apparatus

| Fuel cut controlling section | ~1 |
| --- | --- |

Engine controlling section ~2

| Ignition timing controlling section | ~2a |
| --- | --- |

Calculation section ~3

| Engine speed calculation section | ~3a |
| --- | --- |
| Air amount calculation section | ~3b |
| Standard torque calculation section | ~3c |
| Torque correction section | ~3d |
| State decision section | ~3e |
| Target torque calculation section | ~3h |
| Second torque correction section | ~3k |

BP →

P_IM →

Q →

$\theta_{CL}$ →

$\theta_{AC}$ →

# FIG.4

Standard Torque T

$T = MAP[Ne, Ec]$

Characteristic varies depending upon Ne condition

Charging Efficiency Ec

# FIG.5

# FIG.6

# FIG.7

*Calculation section*

$\theta_{AC}$ — 3h — Target torque calculation section

$\theta_{CL}$ — Engine speed calculation section — 3a — Ne — Standard torque calculation section — 3c

Volumetric efficiency calculation section — 3f

P_IM

Q — Air amount calculation section — 3b — Ec

KMAP — Second air amount calculation section — 3g — Ec1

Torque correction section

BP — $k'= \dfrac{\dfrac{1}{e-1} \times \dfrac{BP}{101.3} + Ec}{Ec1}$ — 3m — k' — (×) — 3n — T_FC — T

3d″

State decision section

3e

Stroke — Stroke number aftre F/C return $\leq$ predetermined value ? — 3s

Presence or absence of fuel cut control (F/C)

Second torque correction section — Torque correction through actual ignition timing, A/F, etc.

3k — 0 — Yes / No — 3t

During F/C execution ?

Engine controlling section — 2

Ignition timing controlling section — 2a

Actual torque

# FIG.8A

Exhaust Top Dead Center

Pressure BP

Burned gas

Vc

V

# FIG.8B

Intake Bottom Dead Center

Not contribute to torque increase

Pressure P_IM

Burned gas

Vc

V

Fresh Air Charging Efficiency [Ec1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008019729 A
- JP 2003322045 A
- EP 1160437 A2
- US 4508074 A
- JP 2007085228 A